# EUROPÄISCHE PATENTSCHRIFT

(11) **EP 2 537 782 B1**
(45) Veröffentlichungstag und Bekanntmachung des Hinweises auf die Patenterteilung: **26.11.2014**
(21) Anmeldenummer: 12004101.7
(22) Anmeldetag: 26.05.2012
(51) Int. Cl.: B65G 17/06, B65G 17/38

(54) **Fördermittel für granulare Medien**
Transporter for granular media
Moyen de transport pour milieux granuleux

(30) Priorität: 22.06.2011 DE 102011105452
(43) Veröffentlichungstag der Anmeldung: 26.12.2012
(73) Patentinhaber: Fahrion, Otmar, 70806 Kornwestheim (DE)
(72) Erfinder: Fahrion, Otmar, 70806 Kornwestheim (DE)
(74) Vertreter: Ostertag, Reinhard

(56) Entgegenhaltungen:
- EP-A1- 0 472 750
- US-A- 2 250 933
- US-A- 2 406 279

## Beschreibung

Die Erfindung betrifft ein flexibles bandförmiges Fördermittel mit
a) einer Kette aus einer Mehrzahl von gelenkig verbundenen Kettengliedern, die in zwei unabhängigen Richtungen gegeneinander verschwenkbar sind, und
b) einer durch die Kettenglieder abgestützten Tragfläche, wobei
c) die Tragfläche durch Traglamellen gebildet ist, die von den Kettengliedern gelenkig getragen sind, wobei
d) Lagerachsen vorgesehen sind, die jeweils mit einem der Kettenglieder verbunden sind,

Die Erfindung betrifft ferner einen Förderer, der ein derartiges Fördermittel umfasst.

Die EP 0 472 750 A1 zeigt einen Förderer mit einer in horizontaler und vertikaler Richtung flexiblen Kette aus überlappenden Kettengliedern sowie ein flexibles bandförmiges Fördermittel nach dem Oberbegriff des Anspruchs 1. Durch Blattfedern, die sich an den Lagerachsen der Kette abstützen, werden die Tragplatten der Kettenglieder an die jeweils nachlaufenden Kettenglieder angepresst.

Fördermittel mit in horizontaler Richtung und vertikaler Richtung flexiblen Ketten, welche eine Transportfläche bilden, sind auch der US 2 25C 933 A und der US 2 406 279 A zu entnehmen.

Aus der DE 102 40 487 A1 ist eine Kette bekannt, deren Kettenglieder zwischen aufeinander folgenden Kettengliedern Schwenkbewegungen in beliebiger Richtung zulassen. Daher kann die Kette auf Wegen geführt werden, die nahezu beliebig im Raum orientiert sind. So kann eine Förderstrecke sowohl ansteigende und abfallende Bogenabschnitte als auch Kurvenabschnitte aufweisen. Die Außenseiten ihrer Kettenglieder können eine Tragfläche zum Fördern von Gegenständen bilden.

Nachteilig an diesen Ketten ist jedoch, dass sie keine große geschlossene Tragfläche aufweisen und damit weniger zum Fördern von granularen Medien geeignet sind.

Aufgabe der Erfindung ist daher, ein Fördermittel der eingangs genannten Art anzugeben, das trotz einer ausgedehnten geschlossenen Tragfläche in zwei zueinander geneigten Richtungen flexibel ist. Ferner ist es Aufgabe der Erfindung, einen Förderer mit einem solchen Fördermittel anzugeben.

Erfindungsgemäß wird diese Aufgabe durch ein Fördermittel nach Anspruch 1 gelöst.

Durch sich schuppenartig überdeckende Traglamellen, die wie die Kettenglieder zueinander beweglich sind, wird eine ausgedehnte geschlossene Tragfläche gebildet, auf welcher ein granulares Medium oder kleinteilige Gegenstände gefördert werden können. Ein solches Fördermittel kann in verschiedenen industriellen Bereichen überall dort eingesetzt werden, wo das Fördergut nicht durch die einzelnen Glieder des Fördermittels dringen darf. Das Fördermittel kann also insbesondere zum Fördern von z.B. Sand, Kies, Kunststoffgranulat, Spänen, etc. oder von z.B. Lebensmitteln, Elektrokleinteilen, etc. verwendet werden.

Aufgrund der in zwei unabhängigen Richtungen beweglichen Kette und den gelenkig getragenen Traglamellen kann das Fördermittel sowohl in ansteigenden oder abfallenden Bogenabschnitten als auch in Kurvenabschnitten bewegt werden, wobei stets eine geschlossene Tragfläche gebildet wird.

Grundsätzlich kann nur jedes zweite oder dritte Kettenglied eine Traglamelle tragen, welche dann die Kettenglieder ohne Traglamelle überdeckt. Vorzugsweise tragen jedoch alle Kettenglieder eine Traglamelle, da man so eine bessere Flexibilität des Fördermittels erhält.

Vorzugsweise umfasst die Kette des Fördermittels Kettenglieder, die jeweils eine konvexe Kugelabschnittsfläche und eine komplementäre konkave Kugelabschnittsfläche aufweisen, die zusammen zwischen je zwei Kettengliedern ein erstes Kugelgelenk vorgeben. Dabei sind die Kettenglieder über innen liegende Verbindungsglieder zusammengehalten, die jeweils zwei Kettenglieder verbinden, wobei die Verbindungsglieder einen kalottenförmigen Gelenkabschnitt aufweisen, der mit einer kugelförmigen Gelenkschale im Inneren der Kettenglieder zusammenarbeitet, um ein zweites Kugelgelenk zu bilden, dessen Gelenkpunkt mit dem Gelenkpunkt des ersten Kugelge lenks zusammenfällt.

Erfindungsgemäß ist ferner vorgesehen, dass bei einer Endkante der Traglamellen eine Schwenkachse angeordnet ist, wobei die Schwenkachse von des Kette nach oben hin beabstandet ist.

Die Schwenkachse kann in einer Seitenführungsschiene eines zugehörigen Förderers geführt werden und dient dann als Stützstruktur für den Tragabschnitt. Vorzugsweise ist die Schwenkachse an einer in Förderrichtung vorne liegenden Endkante angeordnet und der Tragabschnitt der benachbarten Traglamelle liegt im Bereich der Schwenkachse auf.

Mit Hilfe der Lagerachsen sind die Traglamellen und die Kettenglieder gelenkig miteinander verbunden. Dadurch können die Traglamellen in ansteigenden oder abfallenden Bogenabschnitten bezüglich der Kettenglieder verschieden Orientierungen einnehmen, was zu einer höheren Flexibilität des Fördermittels führt. Die mit einem Kettenglied verbundene Lagerachse stützt zudem die Traglamellen. Vorzugsweise wird die Lagerachse ferner seitlich in Seitenführungsschienen eines Förderers geführt und wirkt so als zusätzliche Abstützung der Traglamelle.

Vorteilhafte Weiterbildungen der Erfindung sind Gegenstand weiterer Ansprüche.

Nach der Weiterbildung gemäß Anspruch 2 ist vorgesehen, dass die Traglamellen einen plattenförmigen Tragabschnitt aufweisen, der jeweils den Tragabschnitt einer benachbarten Traglamelle teilweise überdeckt.

Die Überdeckung der schuppenartig aufeinander liegenden Traglamellen ist so gewählt, dass unter Einhaltung der minimalen Bogen- und Kurvenradien des Fördermittels in jeder Situation bzw. zumindest im Förderbereich des Fördermittels eine geschlossene Tragfläche gebildet wird. Vorzugsweise bedeckt der Tragabschnitt der vorauslaufenden Traglamelle den Tragabschnitt der nachfolgenden. Dadurch ist die Gefahr verringert, dass sich Fördergut zwischen die Tragabschnitte schiebt.

Nach der Weiterbildung gemäß Anspruch 3 ist vorgesehen, dass der Tragabschnitt sich in Richtung der benachbarten Traglamelle verjüngt, insbesondere unter circa 2°.

Dadurch können die sich teilweise überdeckenden Tragabschnitte eine weitgehend ebene Fläche bilden.

Nach der Weiterbildung gemäß Anspruch 4 ist vorgesehen, dass der Tragabschnitt eine Knickstelle aufweist.

Durch die Knickstelle am Tragabschnitt wird ein Auflaufbereich gebildet, an welchem der benachbarte Tragabschnitt insbesondere in abfallenden Bogenabschnitt sicher anliegen kann.

Nach der Weiterbildung gemäß Anspruch 5 ist vorgesehen, dass die Schwenkachse senkrecht zur Laufrichtung des Fördermittels und parallel zur Tragfläche angeordnet ist.

Dies erlaubt einen besonders einfachen Aufbau des Fördermittels. Die Schwenkachse wird vorzugsweise von der Kette nach oben hin beabstandet sein, sodass die Tragfläche im eigentlichen Förderbereich, d.h. im Tragtrum des Förderweges oberhalb der Kette liegt.

Nach der Weiterbildung gemäß Anspruch 6 ist vorgesehen, dass die Schwenkachse von vorzugsweise seitlich angeordneten Stützrollen getragen wird.

Diese Stützrollen werden an Seitenführungsschienen geführt, sodass die Reibung an den Seitenführungsschienen gegenüber einer einfachen Zapfenführung reduziert ist.

Nach der Weiterbildung gemäß Anspruch 7 ist vorgesehen, dass die Traglamellen eine prismatische V-Form haben.

Ein Schenkel der prismatischen V-Form bildet den Tragabschnitt. Die Schwenkachse liegt dann vorzugsweise bei der geschlossenen Scheitelkante der V-Form.

Nach der Weiterbildung gemäß Anspruch 8 ist vorgesehen, dass die prismatische V-Form der Traglamellen einen Öffnungswinkel von circa 45° hat.

Nach der Weiterbildung gemäß Anspruch 9 ist vorgesehen, dass die Traglamellen einen plattenförmigen Lagerabschnitt aufweisen, der in etwa die gleichen Abmessungen wie der Tragabschnitt hat.

Dies führt zu einer besonders günstigen Kinematik in geradlinigen und gekrümmten Bahnabschnitten und einer guten Lastverteilung.

Nach der Weiterbildung gemäß Anspruch 10 ist vorgesehen, dass die Traglamellen einstückig sind und durch Extrusion oder Gießen hergestellt werden.

Einstückige Traglamellen übertragen auftretende Kräfte gut vom Tragabschnitt zum Lagerabschnitt. Zudem können die Traglamellen dann einfach z.B. durch Extrusionsverfahren oder Gießen hergestellt werden.

Nach der Weiterbildung gemäß Anspruch 11 ist vorgesehen, dass die Traglamellen aus flexiblem Material gefertigt sind.

Grundsätzlich können die Traglamellen aus starrem Material, wie Aluminium, Stahl, Edelstahl oder starren Kunststoffen, hergestellt sein. Dann können sie die Tragfläche bei entsprechenden geometrischen Abmessungen zumindest bis 15° pro Kettenglied in Kurvenabschnitten, zumindest bis 15° pro Kettenglied in konvexen Bogenabschnitten und zumindest bis 7,5° pro Kettenglied in konkaven Bogenabschnitten schließen. Vorzugsweise sind die Traglamellen jedoch aus elastischem Material, wie z.B. weicheren Kunststoffen oder Gummi, hergestellt, um auch tordierte Tragflächenabschnitte in Kurven- und Bogenabschnitten von zumindest bis zu 5° pro Kettenglied zu ermöglichen.

Nach der Weiterbildung gemäß Anspruch 12 ist vorgesehen, dass zumindest ein Teil der Kettenglieder ein Führungsmittel, insbesondere einen Führungsschlitz oder einen Führungszapfen aufweisen.

Mit Hilfe des Führungsmittels kann die Kette des Fördermittels lastunabhängig präzise geführt werden. Vorzugsweise ist ein profiliertes Führungsmittel, wie eine T-Nut, vorgesehen.

Hinsichtlich des Förderers ist die Aufgabe erfindungsgemäß durch einen Förderer nach Anspruch 13 gelöst.

So wird eine präzise Führung des Fördermittels zumindest bereichsweise z.B. über Umlenkräder erreicht.

Nach der Weiterbildung gemäß Anspruch 14 ist vorgesehen, dass die Kette des Fördermittels von einer Kettenführungsschiene der Führungsstruktur geführt ist.

Dadurch wird das Fördermittel stabilisiert. Insbesondere kann z.B. in Bereichen wo keine stabile Lage der Tragfläche notwendig ist, beispielsweise im Rücklauftrum eines Förderers, das Fördermittel nur über die Kettenführungsschiene geführt werden.

Nach der Weiterbildung gemäß Anspruch 15 ist vorgesehen, dass die Traglamellen des Fördermittels von Seitenführungsschienen der Führungsstruktur geführt sind.

Dadurch wird die Lage der Traglamellen festgelegt. Die Seitenführungsschienen können so ausgestaltet sein, dass sie einen Großteil der Gewichtskräfte aufnehmen und abführen.

Nachstehend wird ein Ausführungsbeispiel der Erfindung unter Bezugnahme auf die Zeichnungen näher erläutert. In diesen zeigen:
- Figur 1: eine perspektivische Ansicht eines Abschnitts eines Förderers mit einem Gliederband;
- Figur 2: eine perspektivische Ansicht des Gliederbands von schräg unten, wobei ein Umlenkbereich des Förderers an einem Antriebsrad gezeigt ist;
- Figur 3: einen Teil-Längsschnitt durch den Förderer entlang der Längsmittellinie im Bereich des Antriebsrades;
- Figur 4: einen transversalen Schnitt des Förderers;
- Figur 5: eine perspektivische Ansicht eines konkav nach oben laufenden Förderabschnitts des Förderers; und
- Figur 6: einen in der Förderebene gebogenen Förderabschnitt des Förderers.

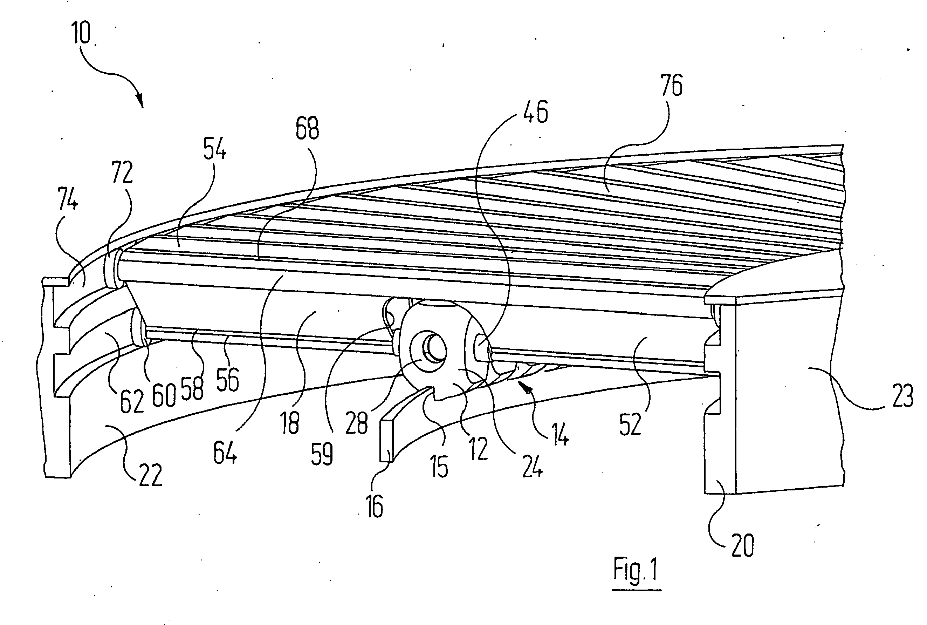

Figur 1 zeigt ein flexibles Gliederband 10 eines Förderers für granulare Fördermedien wie Sand oder andere kleinteilige Fördergüter.

Das Gliederband 10 weist eine aus einer Vielzahl von Kettengliedern 12 aufgebaute Kette 14 auf, wobei die Kettenglieder 12 über einen Führungsschlitz 15 an ihrer Unterseite von einer Mittelschiene 16 geführt sind. Die Kettenglieder 12 tragen Traglamellen 18, welche die Kettenglieder 12 beidseitig überragen und in Seitenführungsschienen 20 und 22 geführt sind. Die Mittelschiene 16 und die beiden Seitenführungsschienen 20 und 22 geben zusammen eine rahmenfeste Führungsstruktur 23 und damit den Verlauf der Förderstrecke des Förderers vor.

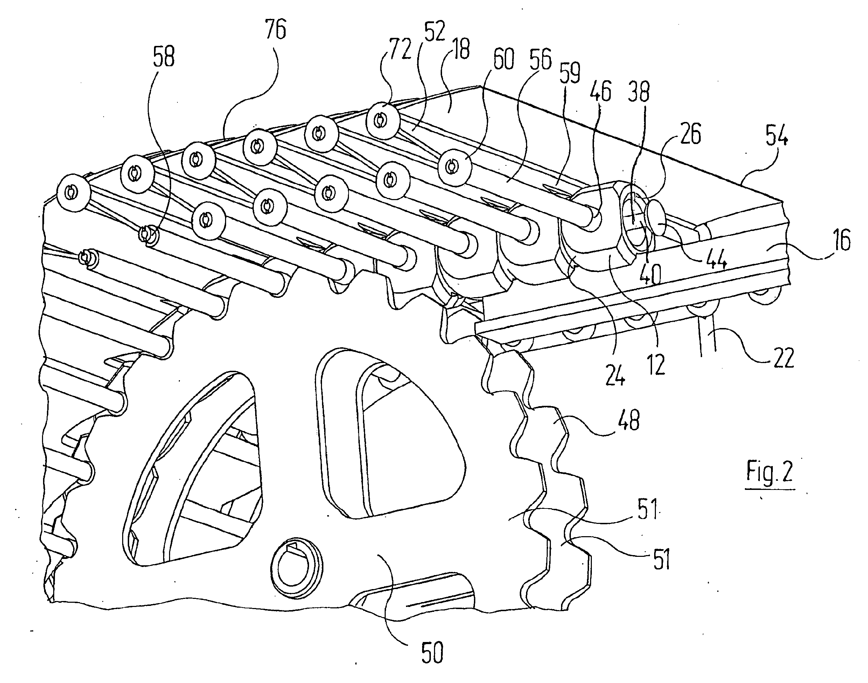

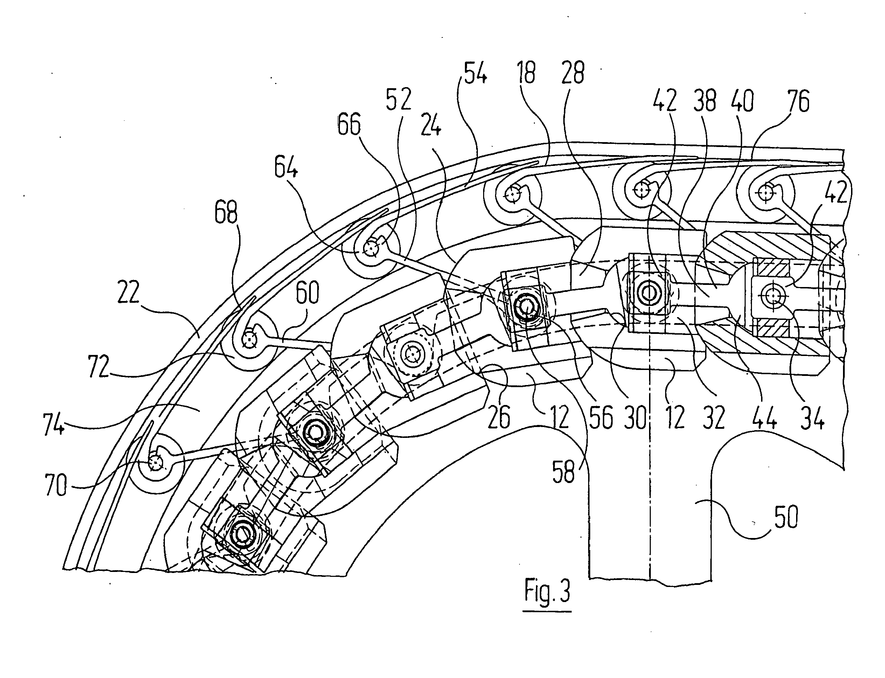

Wie aus den Figuren 2 und 3 ersichtlich ist, weist jedes Kettenglied 12 eine in Förderrichtung weisende vordere konvexe Kugelabschnittsfläche 24 und eine entgegen der Förderrichtung weisende hintere konkave Kugelabschnittsfläche 26 auf, deren Radius dem der konvexen Kugelabschnittsfläche 24 entspricht. Im aufgebauten Zustand der Kette 14 liegen die Kugelabschnittsflächen 24 und 26 zweier benachbarter Kettenglieder 12 aneinander an und bilden ein auf Druck belastbares erstes Kugelgelenk, das Schwenkbewegungen der Kettenglieder 12 zueinander in beliebige Raumrichtungen zulässt.

Die Kettenglieder 12 weisen ferner in der konvexen Kugelabschnittsfläche 24 mittig eine trichterförmige Öffnung 28 auf, die sich zur Innenseite des Kettenglieds 12 hin verjüngt. Im Inneren des Kettenglieds 12 schließt sich an die Öffnung 28 eine konkave kugelförmige Ringfläche 30 an, deren Kugelmittelpunkt mit dem Kugelmittelpunkt der Kugelabschnittsfläche 24 zusammenfällt. Ausgehend von der Ringfläche 30 verläuft eine zylindrische Bohrung 32 zum anderen Ende des Kettenglieds 12, wo diese in der konkaven Kugelabschnittsfläche 26 endet.

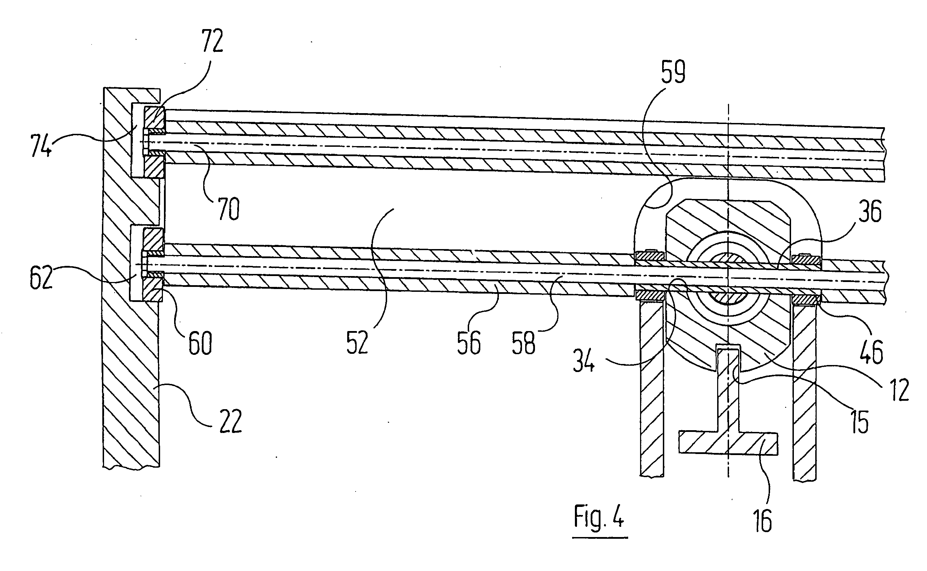

Im Bereich der Bohrung 32 weisen die Kettenglieder 12 ferner jeweils eine Querbohrung 34 (Figur 4) auf, die parallel zur Förderebene des Gliederbands 10 und senkrecht zur Förderrichtung durch das Kettenglied 12 hindurchläuft. In die Querbohrung 34 der Kettenglieder 12 ist jeweils ein Kettenstift 36 eingesetzt, der hier als gespaltene Federhülse ausgeführt ist und beidseitig über das Kettenglied 12 hinausragt.

Zwei aufeinander folgende Kettenglieder 12 sind jeweils über ein Verbindungsglied 38 miteinander verbunden, das eine im Wesentlichen knochenförmige Grundform mit einem in Förderrichtung liegenden Stangenabschnitt 40 hat. Das in Förderrichtung weisende Ende des Verbindungsglieds 38 weist einen Kettenstift-Aufnahmekopf 42 auf, der mit dem Kettenstift 36 des vorauslaufenden Kettengliedes 12 zusammenarbeitet. Das andere Ende des Verbindungsgliedes 38 weist einen kugelförmigen Kalottenabschnitt 44 auf, der zu der innenliegenden konkaven Ringfläche 30 des nachfolgenden Kettenglieds 12 komplementär ist und mit dieser zusammenarbeitet. Dadurch wird ein auf Zug belastbares zweites Kugelgelenk gebildet, welches um dasselbe Drehzentrum drehbar ist wie das erste Kugelgelenk der entsprechenden Kettenglieder 12. Die Kettenglieder 12 der Kette 14 sind somit in beliebigen Richtungen zueinander gelenkig.

Der Kettenstift 36 ist als gespaltene Federhülse ausgebildet und ragt beidseitig aus dem Kettenglied 12 heraus. An den beiden Enden des Kettenstifts 36 sind Verschleißhülsen 46 aufgesteckt, die mit Zähnen 48 eines doppelläufigen Antriebsrades 50 zusammenarbeiten.

Das Antriebsrad 50 weist zwei parallel laufende Zahnkränze 51 auf, deren Abstand so gewählt ist, dass die Kettenglieder 12 teilweise zwischen die beiden Zahnkränze eintauchen können und dabei die Verschleißhülsen 46 zwischen den Zähnen 48 zur Anlage kommen können.

Die Traglamellen 18 des Gliederbands 10 weisen im Wesentlichen einen plattenförmige Lagerabschnitt 52 und einen plattenförmigen Tragabschnitt 54 auf, die im Querschnitt gesehen V-förmig zueinander angeordnet sind, sodass die Traglamellen 18 insgesamt als prismatischer Körper mit V-förmigem Querschnitt erscheinen.

Der Lagerabschnitt 52 wird an einem als Nabe ausgebildeten inneren Schenkelende 56 von einer Lagerachse 58 getragen, welche das zugeordnete Kettenglied 12 durchquert. Der Lagerabschnitt 52 weist dabei eine Aussparung 59 auf, die eine Ausnehmung für die Kettenglieder 12 vorgibt und für ausreichend Bewegungsraum des Lagerabschnitts 52 um das Kettenglied 12 sorgt.

Beim gezeigten Ausführungsbeispiel ist die Lagerachse 58 in dem von einer Federhülse gebildeten Kettenstift 36 angeordnet und ragt beidseitig über den Kettenstift 36 hinaus.

Zu Führungszwecken weist die Lagerachse 58 an ihren Enden Stützrollen 60 auf, welche an den Seitenführungsschienen 20 und 22 in einer ersten Führungsnut 62 laufen. Ausgehende von der Lagerachse 58 verläuft der Lagerabschnitt 52 in Förderrichtung nach vorne schräg aus der Ebene der Kettenglieder 12 heraus bis zu einer Kante 64, die am Übergang zwischen Lagerabschnitt 52 und Tragabschnitt 54 liegt. Dort befindet sich ein nach innen geschlitzter angeformter Hülsenabschnitt 66 der prismatischen Traglamelle 18.

Der Tragabschnitt 54 als zweiter Schenkel der prismatischen Traglamellen 18 knickt an einer Knickstelle 68 nach dem Hülsenabschnitt leicht nach innen ab und verläuft entgegen der Förderrichtung nach hinten. Dort überlappt der sich zum Ende hin unter etwa 2° verjüngende Tragabschnitt 54 teilweise den Tragabschnitt 54 der nachfolgenden Traglamelle 18. Die Traglamellen 18 umschließen dabei mit dem Hülsenabschnitt 66 über etwa 320° eine Schwenkachse 70, die hier ebenfalls Stützrollen 72 aufweist, welche in jeweils einer zweiten Führungsnut 74 der Seitenführungsschienen 20 und 22 laufen. Auf diese Weise ist die Winkelstellung der Traglamelle 18 vorgegeben. Bei der gezeigten Geometrie wurde der Abstand der Führungsnut 74 zu der Führungsnut 62 sowie die Längen der Lagerabschnitte 52 und der Tragabschnitte 54 so gewählt, dass sich für die Schenkel der Traglamellen 18 ein Öffnungswinkel von circa 45° ergibt. Die Traglamellen 18 bilden schließlich eine schuppenartig geschlossene Tragfläche 76, auf der Fördergut gefördert werden kann.

Die Traglamellen 18 werden einstückig in einem nicht spanenden Prozess hergestellt, z.B. extrudiert oder gegossen.

Die Kettenglieder 12 vermitteln über die Lagerachse 58 und den Lagerabschnitt 52 eine Mitnahmekraft, welche gegebenenfalls auch die jeweilige Traglamelle 18 in Förderrichtung vorwärts (oder rückwärts) bewegt. Andererseits sorgt die Führung der Schwenkachse 70 dafür, dass der Tragabschnitt 54 der vorausgehenden, in der Figur 3 links gelegenen Traglamelle 18 an dem Tragabschnitt 54 der nachfolgenden Traglamelle 18 anliegt.

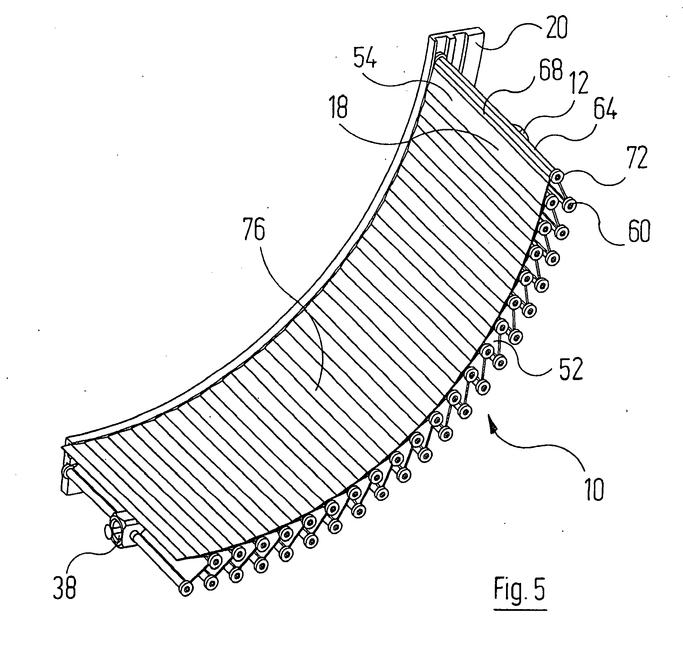

Da die Kettenglieder 12 und die Traglamellen 18 zueinander beweglich sind, kann das flexible Gliederband 10, wie in den Figuren 2, 3 und 5 gezeigt, senkrecht zur Förderebene der Tragfläche 64 konkave und konvexe Bahnabschnitte durchlaufen. Dabei werden bei der Verwendung von starrem Material und bei der gezeigten Geometrie für die Traglamellen 18 Verkippungen aufeinanderfolgender Traglamellen bis etwa 15° (konvexe Bahn) und 7,5° (konkave Bahn) ermöglicht.

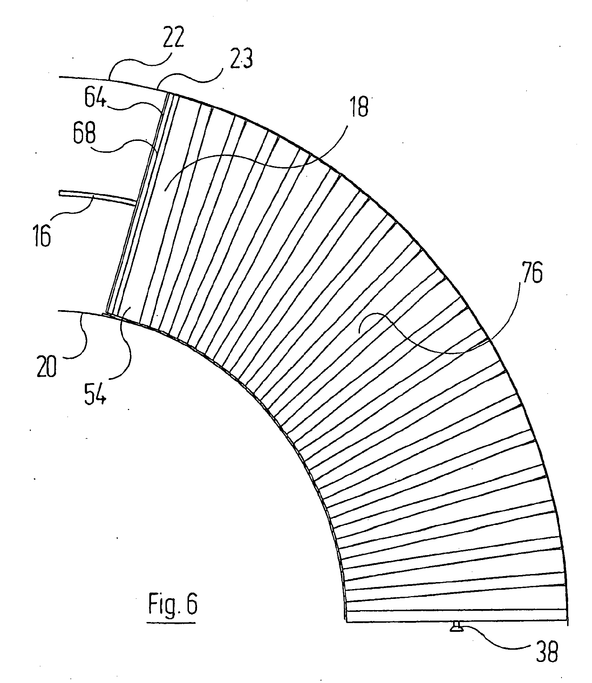

Da die Kettenglieder 12 aufgrund der Kugelgelenke jedoch auch in andere Richtungen beweglich sind, kann das Gliederband 10 auch Kurven in der Förderebene durchlaufen (vgl. Figuren 1 und 6). Wiederum kann bei Verwendung von starrem Material in Kurven eine Verkippung von etwa 15° pro Kettenglied 12 erreicht werden.

Insbesondere bei der Verwendung eines elastischen Materials für die Traglamellen 18 sind ferner Kombinationen aus Kurven und konvexen oder konkaven Bogen mit etwa 5° pro Kettenglied 12 möglich. Hierzu müssen nur die Mittelschiene 16 und die Seitenführungsschienen 20 und 22 entsprechend ausgestaltet sein. Die Konstruktion erlaubt so räumliche Verwindungen des Fördermittels 10. Je nach Anforderung an die Dichtheit der Tragfläche 76 sind aber auch mit Traglamellen 18 aus starrem Material räumliche Verwindungen kombinierter Kurven und Bogen möglich. Insbesondere können starre Traglamellen 18, vorzugsweise an der Auflageseite der Tragabschnitte 54, mit einem elastischen Material wie einer Gummierung überzogen sein, um in verschiedenen Bahnsituationen die Tragfläche 76 dicht zu schließen.

## Patentansprüche

1. Flexibles bandförmiges Fördermittel (10) mit
a) einer Kette (14) aus einer Mehrzahl von gelenkig verbundenen Kettengliedern (12), die in zwei unabhängigen Richtungen gegeneinander verschwenkbar sind, und
b) einer durch die Kettenglieder (12) abgestützten Tragfläche (76), wobei
c) die Tragfläche (76) durch Traglamellen (18) gebildet ist, die von den Kettengliedern (12) gelenkig getragen sind,
d) wobei Lagerachsen (58) vorgesehen sind, die jeweils mit einem der Kettenglieder (12) verbunden sind,
**dadurch gekennzeichnet,**
e) **dass** bei einer Endkante der Traglamellen (18) eine Schwenkachse (70) angeordnet ist, wobei die Schwenkachse von der Kette (14) nach oben hin beabstandet ist.

2. Fördermittel nach Anspruch 1, **dadurch gekennzeichnet, dass** die Traglamellen (18) einen plattenförmigen Tragabschnitt (54) aufweisen, der jeweils den Tragabschnitt (54) einer benachbarten Traglamelle (18) teilweise überdeckt.

3. Fördermittel nach Anspruch 2, **dadurch gekennzeichnet, dass** der Tragabschnitt (54) sich in Richtung der benachbarten Traglamelle (18) verjüngt, insbesondere unter circa 2°.

4. Fördermittel nach Anspruch 2 oder 3, **dadurch gekennzeichnet, dass** der Tragabschnitt (54) eine Knickstelle (68) aufweist.

5. Fördermittel nach einem der Ansprüche 1 bis 4, **dadurch gekennzeichnet, dass** die Schwenkachse (70) senkrecht zur Laufrichtung des Fördermittels (10) und parallel zur Tragfläche (76) angeordnet ist.

6. Fördermittel nach Anspruch 5, **dadurch gekennzeichnet, dass** die Schwenkachse (70) von vorzugsweise seitlich angeordneten Stützrollen (72) getragen wird.

7. Fördermittel nach einem der vorhergehenden Ansprüche, **dadurch gekennzeichnet, dass** die Traglamellen (18) eine prismatische V-Form haben.

8. Fördermittel nach Anspruch 7, **dadurch gekennzeichnet, dass** die prismatische V-Form der Traglamellen (18) einen Öffnungswinkel von circa 45° hat.

9. Fördermittel nach einem der Ansprüche 2 bis 8, **dadurch gekennzeichnet, dass** die Traglamellen (18) einen plattenförmigen Lagerabschnitt (52) aufweisen, der in etwa die gleichen Abmessungen wie der Tragabschnitt (54) hat.

10. Fördermittel nach einem der vorhergehenden Ansprüche, **dadurch gekennzeichnet, dass** die Traglamellen (18) einstückig sind und durch Extrusion oder Gießen hergestellt werden.

11. Fördermittel nach einem der vorhergehenden Ansprüche, **dadurch gekennzeichnet, dass** die Traglamellen (18) aus flexiblem Material gefertigt sind.

12. Fördermittel nach einem der vorhergehenden Ansprüche, **dadurch gekennzeichnet, dass** zumindest ein Teil der Kettenglieder (12) ein Führungsmittel, insbesondere einen Führungsschlitz (15) oder einen Führungszapfen, aufweist.

13. Förderer, der ein Fördermittel (10) nach einem der vorhergehenden Ansprüche umfasst, **dadurch gekennzeichnet, dass** für das Fördermittel (10) eine rahmenfeste Führungsstruktur (16, 20, 22) vorgesehen ist.

14. Förderer nach Anspruch 13, **dadurch gekennzeichnet, dass** die Kette (14) des Fördermittels (10) von einer Kettenführungsschiene (16) der Führungsstruktur geführt ist.

15. Förderer nach Anspruch 13 oder 14, dadurch gekenn zeichnet, dass die Traglamellen (18) des Fördermittels (10) von Seitenführungsschienen (20, 22) der Führungsstruktur geführt sind.

## Claims

1. A flexible belt-type conveyor means (10) having
a) a chain (14) comprising a plurality of chain elements (12) which are connected in articulated manner and can be pivoted with respect to one another in two independent directions, and
b) a carrying surface (76) which is supported by the chain elements (12), wherein
c) the carrying surface (76) is formed by carrying segments (18) which are carried in articulated manner by the chain elements (12),
d) wherein bearing axles (58) are provided which are each connected to one of the chain elements (12),
**characterised in that**
e) a pivot axle (70) is arranged adjacent to an end edge of the carrying segments (18), wherein the pivot axle is upwardly spaced from the chain (14).

2. A conveyor means according to Claim 1, **characterised in that** the carrying segments (18) have a plate-shaped carrying portion (54) which partially covers the carrying portion (54) of an adjacent carrying segment (18).

3. A conveyor means according to Claim 2, **characterised in that** the carrying portion (54) tapers in the direction of the adjacent carrying segment (18), in particular by approximately 2°.

4. A conveyor means according to Claim 2 or 3, **characterised in that** the carrying portion (54) has a kink (68).

5. A conveyor means according to one of Claims 1 to 4, **characterised in that** the pivot axle (70) is arranged perpendicularly to the running direction of the conveyor means (10) and parallel to the carrying surface (76).

6. A conveyor means according to Claim 5, **characterised in that** the pivot axle (70) is carried by preferably laterally arranged supporting rollers (72).

7. A conveyor means according to one of the preceding claims, **characterised in that** the carrying segments (18) have a prismatic V shape.

8. A conveyor means according to Claim 7, **characterised in that** the prismatic V shape of the carrying segments (18) has an opening angle of circa 45°.

9. A conveyor means according to one of Claims 2 to 8, **characterised in that** the carrying segments (18) have a plate-shaped bearing potion (52) which has approximately the same dimensions as the carrying portion (54).

10. A conveyor means according to one of the preceding claims, **characterised in that** the carrying segments (18) are in one piece and are manufactured by extrusion or casting.

11. A conveyor means according to one of the preceding claims, **characterised in that** the carrying segments (18) are made from a flexible material.

12. A conveyor means according to one of the preceding claims, **characterised in that** at least some of the chain elements (12) have a guide means, in particular a guide slot (15) or a guide pin.

13. A conveyor which comprises a conveyor means (10) according to one of the preceding claims, **characterised in that** a guide structure (16, 20, 22) fixed to a frame is provided for the conveyor means (10).

14. A conveyor according to Claim 13, **characterised in that** the chain (14) of the conveyor means (10) is guided by a chain guide rail (16) of the guide structure.

15. A conveyor according to Claim 13 or 14, **characterised in that** the carrying segments (18) of the conveyor means (10) are guided by lateral guide rails (20, 22) of the guide structure.

## Revendications

1. Moyen de transport flexible (10) en forme de bande, avec
a) une chaîne (14) constituée d'une pluralité de maillons (12) reliés de façon articulée, qui sont pivotants les uns par rapport aux autres dans deux directions indépendantes, et
b) une surface porteuse (76) soutenue par les maillons (12),
c) sachant que la surface porteuse (76) est formée par des lamelles porteuses (18) qui sont portées de façon articulée par les maillons (12),
d) sachant que des axes de palier (58) sont prévus, qui sont respectivement reliés à un des maillons (12),
**caractérisé en ce que**
e) un axe de pivotement (70) est disposé au niveau d'une arête terminale des lamelles porteuses (18), sachant que l'axe de pivotement est distant de la chaîne (14) vers le haut.

2. Moyen de transport selon la revendication 1, **caractérisé en ce que** les lamelles porteuses (18) présentent une partie porteuse (54) en forme de plaque, qui recouvre chaque fois partiellement la partie porteuse (54) d'une lamelle porteuse voisine (18).

3. Moyen de transport selon la revendication 2, **caractérisé en ce que** la partie porteuse (54) se rétrécit en direction de la lamelle porteuse voisine (18), notamment d'environ 2°.

4. Moyen de transport selon la revendication 2 ou 3, **caractérisé en ce que** la partie porteuse (54) présente un point d'inflexion (68).

5. Moyen de transport selon l'une des revendications 1 à 4, **caractérisé en ce que** l'axe de pivotement (70) est disposé perpendiculairement à la direction d'avancement du moyen de transport (10) et parallèlement à la surface porteuse (76).

6. Moyen de transport selon la revendication 5, **caractérisé en ce que** l'axe de pivotement (70) est porté par des galets de soutien (72) disposés de préférence latéralement.

7. Moyen de transport selon l'une des revendications précédentes, **caractérisé en ce que** les lamelles porteuses (18) ont une forme de prisme en V.

8. Moyen de transport selon la revendication 7, **caractérisé en ce que** la forme de prisme en V des lamelles porteuses (18) possède un angle d'ouverture d'environ 45°.

9. Moyen de transport selon l'une des revendications 2 à 8, **caractérisé en ce que** les lamelles porteuses (18) présentent une partie de palier (52) en forme de plaque qui possède approximativement les mêmes dimensions que la partie porteuse (54).

10. Moyen de transport selon l'une des revendications précédentes, **caractérisé en ce que** les lamelles porteuses (18) sont d'un seul tenant et sont fabriquées par extrusion ou par moulage.

11. Moyen de transport selon l'une des revendications précédentes, **caractérisé en ce que** les lamelles porteuses (18) sont fabriquées en matériau flexible.

12. Moyen de transport selon l'une des revendications précédentes, **caractérisé en ce qu'**au moins une partie des maillons (12) présentent un moyen de guidage, notamment une fente de guidage (15) ou un tenon de guidage.

13. Convoyeur, qui comprend un moyen de transport (10) selon l'une des revendications précédentes, **caractérisé en ce qu'**une structure de guidage (16, 20, 22) solidaire du châssis est prévue pour le moyen de transport (10).

14. Convoyeur selon la revendication 13, **caractérisé en ce que** la chaîne (14) du moyen de transport (10) est guidée par un rail de guidage de chaîne (16) de la structure de guidage.

15. Convoyeur selon la revendication 13 ou 14, **caractérisé en ce que** les lamelles porteuses (18) du moyen de transport (10) sont guidées par des rails de guidage latéraux (20, 22) de la structure de guidage.
